# EUROPÄISCHE PATENTSCHRIFT

(11) **EP 2 334 526 B1**
(45) Veröffentlichungstag und Bekanntmachung des Hinweises auf die Patenterteilung: **18.12.2019**
(21) Anmeldenummer: 09778266.8
(22) Anmeldetag: 02.09.2009
(51) Int. Cl.: B60T 8/17, B60T 8/32, B60T 13/68, B60T 17/22, B61C 15/00

(54) **ELEKTROPNEUMATISCHE BREMSEINRICHTUNG SOWIE VERFAHREN ZUM BETRIEB DERSELBEN**
ELECTROPNEUMATIC BRAKE DEVICE AND METHOD FOR OPERATING THE SAME
SYSTÈME DE FREINAGE ÉLECTROPNEUMATIQUE ET PROCÉDÉ POUR LE FAIRE FONCTIONNER

(30) Priorität: 04.09.2008 DE 102008045712
(43) Veröffentlichungstag der Anmeldung: 22.06.2011
(73) Patentinhaber: KNORR-BREMSE Systeme für Schienenfahrzeuge GmbH, 80809 München (DE)
(72) Erfinder: HERDEN, Marc-Oliver, 81377 München (DE); ENGLBRECHT, Matthaeus, 81673 München (DE)
(74) Vertreter: Schönmann, Kurt
(86) Internationale Anmeldenummer: PCT/EP2009/006340
(87) Internationale Veröffentlichungsnummer: WO 2010/025892

(56) Entgegenhaltungen:
- EP-A2- 0 855 319
- AU-A1- 2006 213 971
- DE-A1- 19 529 919
- DE-A1- 19 848 992

## Beschreibung

Die vorliegende Erfindung betrifft eine elektropneumatische Bremseinrichtung eines Schienenfahrzeuges, umfassend einen elektronischen Gleitschutzrechner zur Erhaltung des Haftwertes zwischen Rad und Schiene durch Ansteuerung hieran angeschlossener und je einem Bremszylinder zugeordneter Gleitschutzventile. Weiterhin umfasst die Erfindung auch ein Verfahren zum Betrieb einer solchen elektropneumatischen Bremseinrichtung sowie ein dieses Verfahren verkörperndes Computerprogrammprodukt. Schließlich ist auch ein Schienenfahrzeug, das mit einer erfindungsgegenständlichen elektropneumatischen Bremseinrichtung ausgestattet ist, Gegenstand der Erfindung.

Das Einsatzgebiet der vorliegenden Erfindung erstreckt sich auf Schienenfahrzeuge, welche per Luftdruck gebremst werden. Zu diesem Zweck wird einer oder mehrere pneumatischer Bremszylinder/Aktuator durch ein Bremsventil, beispielsweise ein volumenverstärkendes Relaisventil, mit einem im Schienenfahrzeug bevorrateten Bremsdruck beaufschlagt. Dies erfolgt meist über eine pneumatische Bremsregelung nach Maßgabe einer elektrischen Sollwertvorgabe von einer zentralen Zugsteuerung aus. Die Berechnung des Stellwerts für die Bremsventile wird dabei durch eine elektronische Bremssteuereinheit durchgeführt. Daneben ist bei modernen elektropneumatischen Bremseinrichtungen auch ein Gleitschutzrechner vorgesehen, welcher in Abhängigkeit wenigstens eines von einem Gleitschutzsensor gelieferten Drehgeschwindigkeitssignals den Radschlupf der Räder wenigstens einer Achse regelt oder mit Rollüberwachungsmitteln die Drehgeschwindigkeit der Räder erfasst. Ferner ist auch ein Fahrwerksüberwachungsrechner Bestandteil einer modernen Bremseinrichtung, welcher eine Diagnose des Fahrwerks im Hinblick auf kritische Zustände und Schäden dient, wie beispielsweise Entgleisung, heißgelaufene Lager und ähnliches.

Aus der DE 10 2005 010 118 A1 geht eine gattungsgemäße elektropneumatische Bremseinrichtung hervor. Hierbei ist die Gleitschutzsteuerung in einem einzigen elektronischen Bremssteuergerät integriert. An diesem sind eingangsseitig die Sensoren zur Ermittlung der momentanen Drehgeschwindigkeit der Räder angeschlossen. Die Bremssteuereinheit vergleicht die Radgeschwindigkeit mit der momentanen Geschwindigkeit des Schienenfahrzeuges und ist so in der Lage, einen Radschlupf zu erkennen. In diesem Falle wird der Bremsdruck zur Anpassung mittels elektropneumatischer Gleitschutzventile reduziert. Dieser Gleitschutzmechanismus ist bei modernen Schienenfahrzeugen nicht allein während des normalen Bremsbetriebs aktiv, sondern soll auch bei einer Notbremsung funktionieren. In der Regel wird der Bremszylinderdruck für die Notbremsung rein pneumatisch, unabhängig von der Elektronik, erzeugt. Der Gleitschutz übt dabei prinzipiell die Funktion eines Druckreglers aus, wobei die Gleitschutzventile als Aktuatoren ansehbar sind.

Die DE 198 48 992 A1 offenbart ein Bremssystem für ein Schienenfahrzeug, wobei die pneumatische Ansteuerung der Bremsen und die Steuereinrichtungen in dem Drehgestell des Schienenfahrzeugs untergebracht sind.

Aus der DE 195 29 919 A1 ist ein Verfahren zur Automatisierung des Rangierbetriebs von schienengebundenen Güterwagen bekannt. Dazu wird die notwendige Technik, wie das ferngesteuerte Abkoppeln der Wagen, das Abbremsen auf eine gleichmäßige Geschwindigkeit, die Einhaltung eines Mindestabstands im Bereich der Weichen und die zielgenaue Abbremsung in den Richtungsgleisen in die Güterwagen integriert.

In elektropneumatischen Bremseinrichtungen des Standes der Technik ist der Gleitschutz gewöhnlich getrennt von der normalen Bremssteuerung für die Betriebsbremsung angeordnet. Pro Wagen oder pro Drehgestell wird der Versorgungsdruck analog zu einem Sollwert auf den gewünschten Bremsdruckzylinder reduziert. Sollte die hieraus resultierende Verzögerung nicht durch den Rad-Schienen-Kontakt eingebracht werden können, wird durch einen unabhängigen Gleitschutz der Bremsdruck beeinflusst. Im Falle einer Notbremsung wird die Bremssteuerung umgangen und ein pneumatisch auf das aktuelle Fahrzeuggewicht abgestimmter Notbremsdruck in die Bremszylinder geleitet. Die Funktion des Gleitschutzes ist die selbe wie während der normalen Betriebsbremsung. Da der Gleitschutz in der Lage ist, Bremsdruck auch während einer Notbremsung zu mindern, unterliegt dieser einer hohen Sicherheitsanforderung, um die notwendige Sicherheit auch in diesem Betriebsfall zu gewährleisten.

Nachteilhaft beim Stand der Technik erweist sich der hohe, insbesondere rechnertechnische Aufwand, welcher zur Realisierung der normalen Betriebsbremsfunktionalität, des Gleitschutzes und zusätzlich der Fahrzeugüberwachung erforderlich ist. Zusätzlich entsteht ventiltechnischer und sensortechnischer Bauteilaufwand.

Es ist die Aufgabe der vorliegenden Erfindung, eine funktionsintegrierte elektropneumatische Bremseinrichtung sowie ein dazugehöriges Verfahren zu deren Betrieb zu schaffen, welche zumindest die Grundfunktionen Betriebsbremsung und Gleitschutz mit geringem gerätetechnischem Aufwand erfüllt.

Die Aufgabe wird ausgehend von einer elektropneumatischen Bremseinrichtung gemäß dem Oberbegriff von Anspruch 1 in Verbindung mit dessen kennzeichnenden Merkmalen gelöst. Verfahrenstechnisch wird die Aufgabe durch Anspruch 7 gelöst. Im Hinblick auf ein dazugehöriges Computerprogrammprodukt wird auf Anspruch 11 verwiesen. Die jeweils rückbezogenen abhängigen Ansprüche geben vorteilhafte Weiterbildungen der Erfindung wieder.

Die Erfindung schließt die technische Lehre ein, dass ein Gleitschutzrechner einer elektropneumatischen Bremseinrichtung einen elektrischen Eingang zu Vorgabe eines Bremssollwerts einer Betriebsbremsfunktion aufweist, und dass den Gleitschutzventilen optional je ein Drucksensor zur Erfassung des anliegenden Bremsdrucks nachgeschaltet ist, dessen Messwerte gegebenenfalls dem Gleitschutzrechner eingangsseitig zugehen, um den Gleitschutzrechner zusätzlich zur Regelung des Bremsdrucks der Betriebsbremse einzusetzen. Für den Fall, dass auf den/die Drucksensoren verzichtet wird, ist der Gleitschutzrechner in der Lage aus dem Brems-/Verzögerungssollwert und den an den Achsen/am Drehgestell/den Rädern angebrachten Geschwindigkeitsgebern einen Bremsdruck so einzusteuern/regeln, dass die daraus resultierende Verzögerung der Sollverzögerung des Fahrzeuges entspricht.

Der Vorteil der erfindungsgemäßen Lösung liegt darin, dass das Gleitschutzsystem der elektropneumatischen Bremseinrichtung ebenfalls zur Regelung der Betriebsbremse herangezogen wird. Da prinzipiell der Gleitschutz einen vollwertigen Regler darstellt, sind die gerätetechnischen Voraussetzungen bereits vorhanden. Die erfindungsgemäße Lösung lässt sich durch geringfügige Modifikationen hinsichtlich Schaffung zusätzlicher Signaleingänge und entsprechende signalverarbeitungstechnische Änderungen mit recht geringem Aufwand umsetzen. Mit der erfindungsgemäße Lösung wird zudem eine direkte Bremsdruckregelung / Verzögerungsregelung durchgeführt, woraus eine höhere Regelgüte resultiert.

Vorzugsweise sollte der Gleitschutzrechner zur Regelung des Bremsdrucks ebenfalls die Gleitschutzventile als Stellglieder ansteuern. Insoweit entfallen auch zusätzliche Bremsventile zur Realisierung der Betriebsbremse.

Im Hinblick auf die Realisierung einer Notbremsung verbessernden Maßnahme wird erfindungsgemäß vorgeschlagen, dass der Gleitschutzrechner während einer Notbremsung den seitens der zentralen Zugsteuerung vorgegebenen Bremssollwert ignoriert. Über einen zusätzlichen elektrischen Eingang wird ein Last-Ist-Wert dem Gleitschutzrechner zugeführt und alternativ als lastabhängiger Ersatzsollwert zum Bremsen verwendet. Somit lässt sich auch die Funktion einer lastabhängigen Notbremsung in einfacher Weise in das Prinzip der erfindungsgemäßen Lösung integrieren.

Ferner wird vorgeschlagen, dass in die Druckleitung zwischen einem auffüllbaren Versorgungsdruckbehälter und den Gleitschutzventilen ventiltechnische Mittel zur Begrenzung des den Gleitschutzventilen speisedruckseitig maximal zuführbaren Versorgungsdrucks angeordnet sind. Derartige ventiltechnische Mittel können beispielsweise als Druckbegrenzungsventil zur pneumatischen Begrenzung oder als kontinuierliches Lastbrems-Relaisventil zur kontinuierlichen Wirkung verwendet werden.

Das Verfahren zum Betrieb einer solchen elektropneumatischen Bremseinrichtung ist angelehnt an die Funktion des um die jeweiligen elektrischen Eingänge erweiterten Gleitschutzrechners, damit dieser in die Lage versetzt wird, zusätzlich zum Gleitschutz auch den Bremsdruck der Betriebsbremse zu regeln. Dieses Verfahren lässt sich innerhalb eines Gleitschutzrechners durch entsprechende in einer Software hinterlegte Steuerungsbefehle umsetzen, welche in Form eines Computerprogrammprodukts vorliegend in elektronische Speichereinheiten von Gleitschutzrechnern hinterlegt werden kann.

Im Rahmen der vorliegenden Erfindung lässt sich die elektropneumatische Bremseinrichtung im Schienenfahrzeug ohne weiteres pro Achse, pro Drehgestell oder pro Wagen anordnen, um die erfindungsgegenständliche Funktion zu erfüllen.

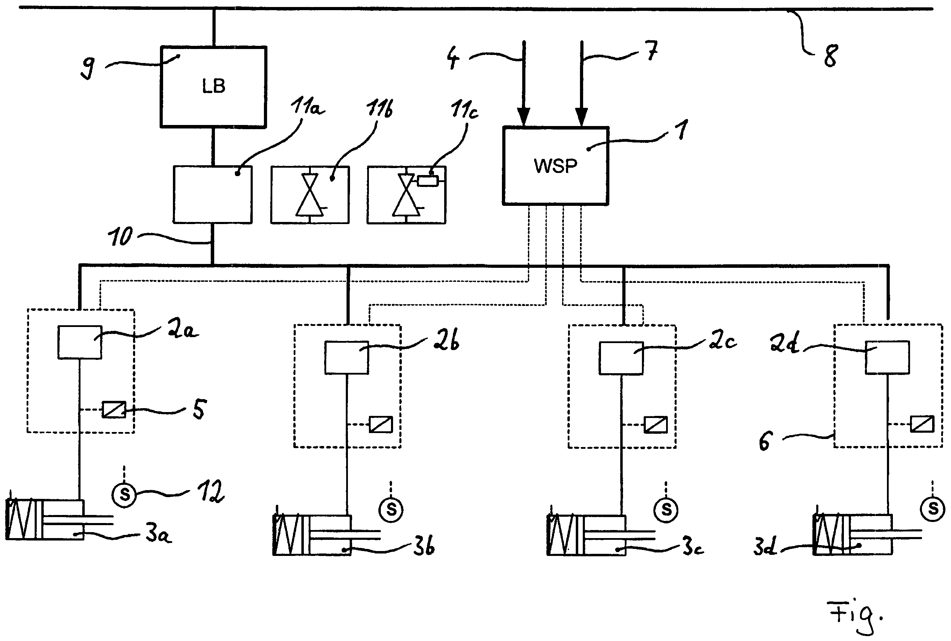

Weitere, die Erfindung verbessernden Maßnahmen werden nachstehend gemeinsam mit der Beschreibung eines bevorzugten Ausführungsbeispiels der Erfindung anhand der einzigen Figur näher dargestellt. Die Figur zeigt eine schematische Blockschaltbilddarstellung einer elektropneumatischen Bremseinrichtung mit Gleitschutzrechner eines Schienenfahrzeuges mit vier Achsen.

Gemäß Figur umfasst die elektropneumatische Bremseinrichtung einen Gleitschutzrechner 1. Eine herkömmliche Bremssteuereinheit existiert nicht. Der Gleitschutzrechner 1 dient in erster Linie zur Erhaltung des Haftwerts zwischen Rad und Schiene durch elektrische Ansteuerung nachgeschalteter Gleitschutzventile 2a bis 2d, welche wiederum zur Druckluftbeaufschlagung je eines zugeordneten Bremszylinders 3a bis 3d dienen.

Der Gleitschutzrechner 1 ist mit einem elektrischen Eingang 4 zur Vorgabe eines Brems-/Verzögerungsssollwerts cₛₒₗₗ seitens des - nicht weiter dargestellten - Steuerstands des Schienenfahrzeuges versehen. Bremsleitungsseitig der Gleitschutzventile 2a bis 2d sind Drucksensoren 5 (exemplarisch) zur Erfassung des anliegenden Bremsdrucks angeordnet. Die elektrischen Messsignale der Drucksensoren 5 gehen ebenfalls dem Gleitschutzrechner 1 eingangsseitig zu. Die Drucksensoren 5 können mit dem je zugeordneten Gleitschutzventil 2a bis 2d eine Baueinheit in Form eines Druckregelventils 6 bilden. Mit dem vorgegebenen Bremssollwert sowie dem aktuell anliegenden Bremsdruck je Bremszylinder 3a bis 3d ist der Gleitschutzrechner 1 - welcher rechentechnisch einen vollwertigen Regler verkörpert - in der Lage, zusätzlich zur Erfüllung des Gleitschutzes auch die Regelung des Bremsdrucks der Betriebsbremse zu übernehmen.

Im Rahmen dieser Funktionalität steuert der Gleitschutzrechner 1 zur Regelung des Bremsdrucks die Gleitschutzventile 2a bis 2d als Stellglieder an, um den erforderlichen Bremsdruck auf die Bremszylinder 3a bis 3d zu geben.

Zur Umsetzung einer Notbremsfunktion ist der Gleitschutzrechner 1 derart eingerichtet, dass ein seitens der zentralen Zugsteuerung vorgegebener Bremssollwert cₛₒₗₗ ignoriert wird und stattdessen der Gleitschutzrechner 1 zur alternativen Nutzung eines lastabhängigen Ersatzsollwerts Tᵢₛₜ die Notbremsung nach Maßgabe dieses Werts durchführt. Zu diesem Zweck ist der Gleitschutzrechner 1 mit einem zusätzlichen elektrischen Eingang 7 versehen.

Zur Begrenzung des den Gleitschutzventilen 2a bis 2d speisedruckseitig maximal zuführbaren Versorgungsdruck wird zwischen einem von einer Hauptluftbehälterleitung 8 gespeisten Versorgungsdruckbehälter 9 und dem speisedruckseitigen Anschluss der Gleitschutzventile 2a bis 2d in eine zentral vom Versorgungsdruckbehälter 9 und dem speisedruckseitigen Anschluss der Gleitschutzventile 2a bis 2d in eine zentral vom Versorgungsdruckbehälter 9 abgehende Druckleitung 10 ventiltechnische Mittel zur Druckbegrenzung eingefügt. Diese ventiltechnischen Mittel können nach der dargestellten Alternative als Druckbegrenzungsventil 11b ausgebildet sein. Gemäß einer anderen Alternative können die Mittel zur Begrenzung des den Gleitschutzventilen 2a bis 2d speisedruckseitig maximal zuführbaren Versorgungsdruck auch als kontinuierliches Last-Brems-Relaisventil 11c ausgebildet sein.

Die vorstehend beschriebene elektropneumatische Bremseinrichtung ist in einem Wagen eines Schienenfahrzeuges zur Bremsung aller Räder verbaut.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, die elektropneumatische Bremseinrichtung pro Achse oder pro Drehgestell in einem Schienenfahrzeug zu verbauen. Ferner können auch andere Varianten der Maximaldruckbegrenzung verwendet werden, sofern diese für die angeschlossenen Gleitschutzventile geeignet sind.

### Bezugszeichenliste

- 1: Gleitschutzrechner
- 2: Gleitschutzventil
- 3: Bremszylinder
- 4: elektrischer Eingang
- 5: Drucksensor
- 6: Druckregelventil
- 7: elektrischer Eingang
- 8: Hauptluftleitung
- 9: Versorgungsdruckbehälter
- 10: Druckleitung
- 11a: ventiltechnische Mittel
- 11b: Druckbegrenzungsventil
- 11c: Relaisventil
- 12: Radgeschwindigkeitssensor

## Patentansprüche

1. Elektropneumatische Bremseinrichtung eines Schienenfahrzeuges, umfassend einen elektronischen Gleitschutzrechner (1) zur Erhaltung des Haftwertes zwischen Rad und Schiene durch Ansteuerung hieran angeschlossener und je einem Bremszylinder (3a-3d) zugeordneter Gleitschutzventilen (2a-2d),
wobei der Gleitschutzrechner (1) einen elektrischen Eingang (4) zur Vorgabe eines Brems-/Verzögerungssollwerts (Cₛₒₗₗ) aufweist, und Sensormittel zur Erfassung bremsungsrelevanter Fahrzeugzustandsgrößen vorgesehen sind deren Messwerte ebenfalls dem Gleitschutzrechner (1) eingangsseitig zugehen, um den Gleitschutzrechner (1) zusätzlich zur Regelung des Bremsdrucks der Betriebsbremse einzusetzen, **dadurch gekennzeichnet, dass** während einer Notbremsung der Gleitschutzrechner (1) den seitens der zentralen Zugsteuerung vorgegebenen Bremssollwert (Cₛₒₗₗ) ignoriert, und dass der Gleitschutzrechner (1) zur alternativen Nutzung eines lastabhängigen Ersatzsollwerts (Tist) einen zusätzlichen elektrischen Eingang (7) zur Vorgabe eines Last-Istwerts aufweist.

2. Elektropneumatische Bremseinrichtung nach Anspruch 1,
**dadurch gekennzeichnet, dass** den Gleitschutzventilen (2a-2d) ein Drucksensor (5) zur Erfassung des anliegenden Bremsdrucks nachgeschaltet ist, dessen Messwerte ebenfalls dem Gleitschutzrechner (1) eingangsseitig zugehen.

3. Elektropneumatische Bremseinrichtung nach Anspruch 1,
**dadurch gekennzeichnet, dass** der Gleitschutzrechner (1) zur Regelung des Bremsdrucks ebenfalls die Gleitschutzventile (2a-2d) als Stellglieder ansteuert.

4. Elektropneumatische Bremseinrichtung nach Anspruch 1,
**dadurch gekennzeichnet, dass** in die Druckleitung (10) zwischen einem Versorgungsdruckbehälter (9) und den Gleitschutzventilen (2a-2d) ventiltechnische Mittel (11) zur Begrenzung des den Gleitschutzventilen (2a-2d) speisedruckseitig maximal zufürbaren Versorgungsdrucks angeordnet sind.

5. Elektropneumatische Bremseinrichtung nach Anspruch 4,
**dadurch gekennzeichnet, dass** die Mittel zur Begrenzung des den Gleitschutzventilen (2a-2d) speisedruckseitig maximal zufürbaren Versorgungsdrucks als Druckbegrenzungsventil (11) ausgebildet sind.

6. Elektropneumatische Bremseinrichtung nach Anspruch 4,
**dadurch gekennzeichnet, dass** die Mittel zur Begrenzung des den Gleitschutzventilen (2a-2d) speisedruckseitig maximal zufürbaren Versorgungsdrucks als kontinuierliches Lastbrems-Relaisventil (11) ausgebildet sind.

7. Verfahren zum Betrieb einer elektropneumatische Bremseinrichtung eines Schienenfahrzeuges, bei welchem ein elektronischer Gleitschutzrechner (1) zur Erhaltung des Haftwertes zwischen Rad und Schiene durch Ansteuerung hieran angeschlossener und je einem Bremszylinder (3a-3d) zugeordneter Gleitschutzventilen (2a-2d) eingesetzt wird,
wobei dem Gleitschutzrechner (1) über einen elektrischen Eingang (4) ein Bremssollwert (Cₛₒₗₗ) vorgegeben wird, und Sensormittel zur Erfassung bremsungsrelevanter Fahrzeugzustandsgrößen genutzt werden, um den Gleitschutzrechner (1) zusätzlich zur Regelung des Bremsdrucks der Betriebsbremse einzusetzen, **dadurch gekennzeichnet, dass** während einer Notbremsung der dem Gleitschutzrechner (1) vorgegebene Bremssollwert (Cₛₒₗₗ) ignoriert wird, und dass der Gleitschutzrechner (1) zur alternativen Nutzung eines lastabhängigen Ersatzsollwerts (Tᵢₛₜ) über einen zusätzlichen elektrischen Eingang (7) ein Last-Istwerts vorgegeben wird.

8. Verfahren nach Anspruch 7,
**dadurch gekennzeichnet, dass** den Gleitschutzventilen (2a-2d) ein Drucksensor (5) zur Erfassung des anliegenden Bremsdrucks zugeordnet wird, dessen Messwerte ebenfalls dem Gleitschutzrechner (1) eingangsseitig zugeleitet werden.

9. Verfahren nach Anspruch 7,
**dadurch gekennzeichnet, dass** durch den Gleitschutzrechner (1) zur Regelung des Bremsdrucks ebenfalls die Gleitschutzventile (2a-2d) als Stellglieder angesteuert werden.

10. Verfahren nach Anspruch 7,
**dadurch gekennzeichnet, dass** eine Begrenzung des den Gleitschutzventilen (2a-2d) speisedruckseitig maximal zufürbaren Versorgungsdrucks durchgeführt wird.

11. Computerprogrammprodukt für eine elektropneumatische Bremseinrichtung nach einem der Ansprüche 1 bis 6, welche nach einem Verfahren nach einem der Ansprüche 7 bis 10 betreibbar ist, wobei die Routine zur zusätzlichen zur Regelung des Bremsdrucks der Betriebsbremse durch den Gleitschutzrechner (1) durch entsprechende in einer Software hinterlegte Steuerungsbefehle umgesetzt ist.

12. Schienenfahrzeug, welches pro Achse, pro Drehgestell oder pro Wagen mit einer elektropneumatischen Bremseinrichtung nach einem der vorstehenden Ansprüche 1 bis 6 ausgerüstet ist.

## Claims

1. Electropneumatic brake device of a rail vehicle, comprising an electronic wheel-slip-protection computer (1) for maintaining the adhesion coefficient between the wheel and the rail by controlling wheel-slip-protection valves (2a to 2d) connected thereto and in each case associated with a brake cylinder (3a to 3d), wherein the wheel-slip-protection computer (1) has an electrical input (4) for the specification of a braking/deceleration set-point value (Cₛₒₗₗ) and sensor means for the detection of vehicle condition variables relevant to braking, whose measured values are also transmitted to the input of the wheel-slip-protection computer (1), to enable the wheel-slip-protection computer (1) also to be used for controlling the operating pressure of the service brake, **characterised in that** during an emergency braking operation the wheel-slip-protection computer (1) ignores the set-point braking value (Cₛₒₗₗ) specified by the central train control system and to enable the alternative use of a load-dependent substitute set-point value (Tᵢₛₜ) the wheel-slip-protection computer (1) has an additional electrical input for the transmission of an actual load value.

2. Electropneumatic brake device according to Claim 1,
**characterised in that** a pressure sensor (5) is connected downstream from the wheel-slip-protection valves (2a to 2d) in order detect the brake pressure applied, whose measured values are also transmitted to the input of the wheel-slip-protection computer (1).

3. Electropneumatic brake device according to Claim 1,
**characterised in that** to regulate the brake pressure the wheel-slip-protection computer (1) also operates the wheel-slip-protection valves (2a to 2d) as actuating elements.

4. Electropneumatic brake device according to Claim 1,
**characterised in that** in the pressure line (10) between a supply pressure container (9) and the wheel-slip-protection valves (2a to 2d), valve means (11) are arranged in order to limit the maximum supply pressure that can be delivered from the supply pressure side to the wheel-slip-protection valves (2a to 2d).

5. Electropneumatic brake device according to Claim 4,
**characterised in that** the means for limiting the maximum supply pressure that can be delivered from the supply pressure side to the wheel-slip-protection valves (2a to 2d) are in the form of a pressure-limiting valve (11).

6. Electropneumatic brake device according to Claim 4,
**characterised in that** the means for limiting the maximum supply pressure that can be delivered from the supply pressure side to the wheel-slip-protection valves (2a to 2d) are in the form of a continuous load-brake relay valve (11).

7. Method for operating an electropneumatic brake device of a rail vehicle, in which an electronic wheel-slip-protection computer (1) is used to maintain the adhesion coefficient between the wheel and the rail by controlling wheel-slip-protection valves (2a to 2d) connected thereto, which are in each case associated with a brake cylinder (3a to 3d), wherein via an electrical input (4) a set-point braking value (Cₛₒₗₗ) is specified to the wheel-slip-protection computer (1), and which uses sensor means for the detection of braking-relevant vehicle condition variables in order also to use the wheel-slip-protection computer (1) to regulate the brake pressure in the service brake,
**characterised in that** during an emergency braking operation the set-point braking value (Cₛₒₗₗ) specified to the wheel-skip-protection computer (1) is ignored and for the alternative use of a load-dependent substitute set-point value (Tᵢₛₜ) an actual load value is transmitted to the wheel-slip-protection computer (1) via an additional electrical input (7).

8. Method according to Claim 7,
**characterised in that** associated with the wheel-slip-protection valves (2a to 2d) there is a pressure sensor (5) for detecting the brake pressure applied, whose measured values are also transmitted to the input of the wheel-slip-protection computer (1).

9. Method according to Claim 7,
**characterised in that** to regulate the brake pressure, the wheel-slip-protection valves (2a to 2d) are also operated by the wheel-slip-protection computer (1) as actuating elements.

10. Method according to Claim 7,
**characterised in that** the maximum supply pressure that can be delivered to the wheel-slip-protection valves (2a to 2d) is limited.

11. Computer program product for an electropneumatic brake device according to any of Claims 1 to 6, which can be operated by a method according to any of Claims 7 to 10, wherein the routine for the additional regulation by the wheel-slip-protection computer (1) of the brake pressure of the service brake is implemented by means of control commands stored in software.

12. Rail vehicle, which is equipped with an electropneumatic brake device according to any of Claims 1 to 6, on each axle, each bogie or each carriage.

## Revendications

1. Dispositif électropneumatique de freinage d'un véhicule ferroviaire, comprenant un ordinateur (1) électronique d'antidérapage pour obtenir la valeur d'adhérence entre roue et rail par commande de soupapes (2d-2d) d'antidérapage, qui y sont raccordées et qui sont associées, respectivement, à un cylindre (3a-3d) de frein,
dans lequel l'ordinateur (1) d'antidérapage a une entrée (4) électrique de prescription d'une valeur (Cₛₒₗₗ) de consigne de freinage/décélération et il est prévu des moyens de capteur pour détecter des grandeurs d'état du véhicule pertinentes pour le freinage, dont les valeurs de mesure sont envoyées également du côté de l'entrée à l'ordinateur (1) d'antidérapage, afin d'utiliser l'ordinateur (1) d'antidérapage supplémentairement pour réguler la pression du frein de service,
**caractérisé en ce que**, pendant un freinage d'urgence, l'ordinateur (1) d'antidérapage néglige la valeur (Cₛₒₗₗ) de consigne de freinage prescrite de la part de la commande centrale de train et **en ce que** l'ordinateur (1) d'antidérapage a, pour l'utilisation alternative d'une valeur (Tᵢₛₜ) de consigne de remplacement, qui dépend de la charge, une entrée (7) électrique supplémentaire de prescription d'une valeur réelle de charge.

2. Dispositif électropneumatique de freinage suivant la revendication 1,
**caractérisé en ce qu'**un capteur (5) de pression pour détecter la pression de frein appliquée, dont les valeurs de mesure sont envoyées du côté de l'entrée également à l'ordinateur (1) d'antidérapage, est monté en aval des soupapes (2a-2d) d'antidérapage.

3. Dispositif électropneumatique de freinage suivant la revendication 1,
**caractérisé en ce que** l'ordinateur (1) d'antidérapage commande, pour réguler la pression de frein, également les soupapes (2a-2d) d'antidérapage comme éléments de réglage.

4. Dispositif électropneumatique de freinage suivant la revendication 1,
**caractérisé en ce que**, dans le conduit (10) de pression entre un réservoir (9) de pression d'alimentation et les soupapes (2a-2d) d'antidérapage, sont montés des moyens (11) en technique de soupape de limitation de la pression d'alimentation pouvant être envoyée au maximum du côté de la pression d'alimentation aux soupapes (2a-2d) d'antidérapage.

5. Dispositif électropneumatique de freinage suivant la revendication 4,
**caractérisé en ce que** les moyens de limitation de la pression d'alimentation pouvant être envoyée au maximum du côté de la pression d'alimentation aux soupapes (2a-2d) d'antidérapage sont constitués sous la forme d'une soupape (11) limitant la pression.

6. Dispositif électropneumatique de freinage suivant la revendication 4,
**caractérisé en ce que** les moyens de limitation de la pression d'alimentation pouvant être envoyée au maximum du côté de la pression d'alimentation aux soupapes (2a-2d) d'antidérapage sont constitués sous la forme d'une soupapes (11) relais de frein à la charge continue.

7. Procédé pour faire fonctionner un dispositif électropneumatique de freinage d'un véhicule ferroviaire, dans lequel on utilise un ordinateur (1) électronique d'antidérapage pour obtenir la valeur d'adhérence entre roue et rail par commande de soupapes (2d-2d) d'antidérapage, qui y sont raccordées et qui sont associées, respectivement, à un cylindre (3a-3d) de frein,
dans lequel on prescrit à l'ordinateur (1) d'antidérapage, par une entrée (4) électrique, une valeur (Cₛₒₗₗ) de consigne de freinage et on utilise des moyens de capteur pour détecter des grandeurs d'état du véhicule pertinentes pour le freinage, afin d'utiliser l'ordinateur (1) d'antidérapage supplémentairement pour réguler la pression du frein de service,
**caractérisé en ce que**, pendant un freinage d'urgence, on néglige la valeur (Cₛₒₗₗ) de consigne de frein prescrite à l'ordinateur (1) d'antidérapage et **en ce que** l'on prescrit à l'ordinateur (1) d'antidérapage, pour l'utilisation alternative d'une valeur (Tᵢₛₜ) de consigne de remplacement, qui dépend de la charge, une valeur réelle de charge par une entrée (7) électrique supplémentaire.

8. Procédé suivant la revendication 7,
**caractérisé en ce que** l'on associe aux soupapes (2a-2d) d'antidérapage un capteur (5) de pression pour détecter la pression de frein appliquée, capteur dont on envoie également, du côté de l'entrée, les valeurs de mesure à l'ordinateur (1) d'antidérapage.

9. Procédé suivant la revendication 7,
**caractérisé en ce que** l'on commande également les soupapes (2a-2d) d'antidérapage, comme éléments de réglage, par l'ordinateur (1) d'antidérapage pour réguler la pression de frein.

10. Procédé suivant la revendication 7,
**caractérisé en ce que** l'on effectue une limitation de la pression d'alimentation pouvant être envoyée au maximum du côté de la pression d'alimentation aux soupapes (2a-2d) d'antidérapage.

11. Produit de programme d'ordinateur d'un dispositif électropneumatique de freinage suivant l'une des revendications 1 à 6, qui peut fonctionner par un procédé suivant l'une des revendications 7 à 10, les programmes de régulation supplémentaire de la pression du frein de service étant mis en œuvre par l'ordinateur (1) d'antidérapage par des instructions de commande correspondantes mises en mémoire dans un logiciel.

12. Véhicule ferroviaire, qui par essieu, par boggie ou par voiture, est équipé d'un dispositif électropneumatique de freinage suivant l'une des revendications 1 à 6 précédentes.
